# EUROPÄISCHE PATENTSCHRIFT

(11) **EP 3 126 137 B1**
(45) Veröffentlichungstag und Bekanntmachung des Hinweises auf die Patenterteilung: **01.06.2022**
(21) Anmeldenummer: 15715211.7
(22) Anmeldetag: 02.04.2015
(51) Int. Cl.: B32B 7/02, B32B 27/08, B32B 27/32, B32B 3/04, B65D 65/40

(54) **VERPACKUNGSBEUTEL MIT EINEM BIAXIAL ORIENTIERTEN SIEGELFOLIENVERBUND**
PACKING BAG WITH A BIAXIALLY ORIENTED SEALING FILM COMPOSITE
SAC D'EMBALLAGE AVEC UN FILM COMPOSITE THERMOSCELLABLE BI-ORIENTÉ

(30) Priorität: 02.04.2014 DE 102014206334
(43) Veröffentlichungstag der Anmeldung: 08.02.2017
(73) Patentinhaber: Huhtamaki Flexible Packaging Germany GmbH & Co. KG, 87671 Ronsberg/Allgäu (DE)
(72) Erfinder: DAELMANS, Eddy, 87671 Ronsberg (DE); SCHRÄGLE, Matthias, 87452 Altusried (DE); HERMANN, Christian, 91330 Eggolsheim (DE); KELM, Roland, 91301 Forchheim (DE); BERNHARD, Sven, 91077 Neunkirchen am Brand (DE); SEBALD, Ingrid, 91207 Lauf (DE)
(74) Vertreter: Ruttensperger Lachnit Trossin Gomoll
(86) Internationale Anmeldenummer: PCT/EP2015/057290
(87) Internationale Veröffentlichungsnummer: WO 2015/150511

(56) Entgegenhaltungen:
- EP-A2- 0 194 588
- DE-B2- 2 254 640
- US-A- 5 618 618
- US-A1- 2005 142 367

## Beschreibung

Die vorliegende Erfindung betrifft einen Verpackungsbeutel zur Verpackung von Lebensmitteln, umfassend einen Siegelfolienverbund in einem Siegelabschnitt, welcher einen Dickensprungbereich aufweist. Der Siegelfolienverbund ist ein biaxial orientierter Siegelfolienverbund mit mehr als einer Kunststoff-Folienschicht, insbesondere mit genau zwei oder genau drei Kunststoff-Folienschichten, und mit einer Gesamtdicke von nicht mehr als 30 µm, mit einer nach außen freiliegenden siegelfähigen Polyolefinschicht, einer dieser unmittelbar benachbarten Basisschicht aus Polyolefin, welche sich wenigstens hinsichtlich der Polymerzusammensetzung von der siegelfähigen Polyolefinschicht unterscheidet, und gegebenenfalls mit einer weiteren, insbesondere nach außen freiliegenden, Kunststoffschicht, von welchen Schichten die Basisschicht die größte Dicke aufweist. Der Dickensprungbereich ist dergestalt, dass zu einer Seite des Dickensprungbereichs zwei übereinander angeordnete und miteinander durch Siegeln verbundene Lagen aus dem Siegelfolienverbund vorgesehen sind und dass zu dessen anderer Seite mehr als zwei übereinander angeordnete Lagen aus dem Siegelfolienverbund vorgesehen sind, wobei von den letztgenannten mehr als zwei übereinander angeordneten Lagen wenigstens einige benachbarte Lagen durch Siegeln miteinander verbunden sind. Ein dreischichtiger Siegelfolienverbund, jedoch ohne biaxiale Orientierung, ist aus der EP 1 336 475 A bekannt. Folienverbünde, wie der vorliegende Siegelfolienverbund, werden häufig zur Herstellung von Lebensmittelverpackungen verwendet. Der aus der EP 1 336 475 A bekannte Siegelfolienverbund dient zur Herstellung einer peelfähigen Polyolefinfolie für Stehbeutel.

Ein weiterer bekannter Siegelfolienverbund ist der offenkundig vorbenutzte Siegelfolienverbund MB400 von Exxon Mobile mit den am Markt angebotenen Dicken von 17 µm, 20 µm, 25 µm und 30 µm.

Aus der US 2005/0142367 A1 ist eine heißsiegelbare biaxial orientierte Polypropylenfolie bekannt. Diese bekannte BOPP-Folie weist eine Basisschicht aus Polyolefin auf und wenigstens eine an die Basisschicht angrenzend angeordnete, als "skin layer" bezeichnete außen liegende heißsiegelbare Lage auf. Für die Basisschicht ist ein Schmelzflussindex im Bereich von 1 bis 9 g/10 min angegeben, für die außen liegende "skin layer" ein Schmelzflussindex von etwa 2,0 bis 7,5 g/10 min. Die Filmdicke ist im Bereich von 10,2 µm bis 25,4 µm offenbart.

Im Gegensatz zur vorliegenden Erfindung enthält die US 2005/0142367 A1 jedoch keine konkrete technische Lehre dahingehend, die Schmelzflussindizes der heißsiegelbaren Außenlage einerseits und der Basisschicht andererseits derart zu wählen, dass der Schmelzflussindex der heißsiegelbaren Außenlage wenigstens gleich groß ist wie der Schmelzflussindex des Materials der Basisschicht und höchstens nicht mehr als das Dreifache des Schmelzflussindex des Materials der Basisschicht beträgt. Alle in der US 2005/0142367 A1 offenbarten konkreten Ausgestaltungen eines biaxial orientierten Siegelfolienverbunds: Vergleichsbeispiel 1, Ausführungsbeispiel 1 und Ausführungsbeispiel 2, zeigen eine heißsiegelbare Außenlage aus einem Material, dessen Schmelzflussindex das Dreifache des Schmelzflussindex der Basisschicht übersteigt.

Die US 2005/0142367 A1 offenbart weiter die Anwendbarkeit des dort offenbarten biaxial orientierten Siegelfolienverbunds zur Verpackung von Lebensmitteln, insbesondere zur Verpackung von "Snack Food", also von trockenen Lebensmitteln in kleinen Portionen.

Der bekannte Siegelfolienverbund kann in VFFS-Verpackungsmaschinen und in HFFS-Verpackungsmaschinen eingesetzt werden, ohne dass die US 2005/0142367 A1 jedoch konkrete Verpackungsgestalten nennt.

Aus der EP 0 194 588 A ist eine beidseitig siegelbare biaxial orientierte Polyolefin-Mehrschichtfolie bekannt. Diese weist drei Schichten auf, nämlich eine zentrale Basisschicht und beidseitig auf diese aufgebracht je eine Siegelschicht.

Für das Material der Basisschicht ist in der EP 0 194 588 A2 ein Schmelzflussindexbereich von 1,5 g/10 min bis 4 g/10 min bei 230 °C und 2,16 kg angegeben. Für das Material der Siegelschichten ist ein Schmelzflussindex in einem Bereich von 1 bis 12 g/10 min angegeben. Die EP 0 194 588 A offenbart keine Verpackungsformen oder Ausgestaltungen von Siegelbereichen.

Aus der DE 22 54 640 B2 ist eine Beutelverpackung bekannt, welche an seinen Seitenrändern W-förmig eingefaltet ist und an seinen Längsenden über die W-Faltung hinweg durch eine Siegelnaht verschlossen ist. Der so gebildete Beutel ist aus einer einlagigen heißsiegelbaren thermoplastischen Kunststofflage gebildet, die unter anderem aus Polyethylen oder Polypropylen, aber auch aus Polyamid, Polyester usw. gebildet sein kann.

Dieser Beutel aus einlagigem Verpackungsmaterial ist durch zwei weitere Beutel umgeben, die jeweils aus Papier gefertigt sind. Ein innerer Papierbeutel - in der DE 22 54 640 B2 als "Zwischensack" bezeichnet - ist einlagig ausgebildet, ein den Zwischensack umgebender Außensack ist aus zweilagigem Papiermaterial gebildet. Der Zwischensack umgibt den einzigen aus thermoplastischem Material gebildeten Innensack, der Außensack umgibt wiederum den Zwischensack und den Innensack.

An der aus der DE 22 54 640 B2 bekannten W-Faltung tritt ein Dickensprungbereich auf, wie er eingangs der Anmeldung genannt ist.

Derart dünne Siegelfolienverbünde mit einer Gesamtdicke (einschließlich etwaig vorhandener Nicht-Kunststoff-Schichten) von nicht mehr als 30 µm sind aufgrund ihres geringen Gewichts als Verpackungsmaterial sehr geschätzt. Der Siegelfolienverbund weist mehr als eine Folienschicht auf, nämlich wenigstens die Basisschicht und wenigstens eine nach außen freiliegende siegelfähige Polyolefinschicht. Zwar können sich grundsätzlich an die Basisschicht weitere Folienschichten anschließen, so dass die siegelfähige Polyolefinschicht außen liegend bleibt, so lange die Gesamtdicke von 30 µm nicht überschritten wird. Aus Kostengründen ist jedoch eine Folienschichtanzahl von genau zwei oder genau drei Folienschichten bevorzugt.

Weiter ist erfindungsgemäß vorgesehen, dass der Siegelfolienverbund biaxial gereckt sein soll, da die biaxiale Reckung zu zahlreichen vorteilhaften Eigenschaftsänderungen des Siegelfolienverbunds führt, verglichen mit einem ungereckten Siegelfolienverbund. Hierzu sind Ausführungen weiter unten im Anmeldungstext enthalten.

Auch die vorliegende Erfindung befasst sich mit der Verwendung von Siegelfolienverbünden an Lebensmittelverpackungen, insbesondere an Stehbeuteln. Ausgangspunkt der durch die vorliegende Erfindung gelösten technischen Problemstellung ist jedoch nicht - wie in der oben zitierten EP 1 336 475 A - die Bereitstellung einer peelfähigen Folie, wenngleich dies nicht ausgeschlossen ist, sondern vielmehr die Lösung eines Dichtigkeits- oder/und Festigkeitsproblems an Übergängen von Siegelbereichen einer Lebensmittelverpackung, wobei auf einer Seite eines solchen Übergangs lediglich zwei Lagen des Siegelfolienverbunds übereinander angeordnet und miteinander durch Siegeln verbunden sind und auf der anderen Seite mehr als zwei, insbesondere vier Lagen des Siegelfolienverbunds übereinander angeordnet sind, von welchen wenigstens je zwei benachbarte paarweise durch Siegeln miteinander verbunden sein können. Derartige Übergänge an Siegelbereichen können durch Einfaltungen bewirkt sein, wie sie beim Einfalten von Stehböden in Beutelverpackungen entstehen können.

Der erste Bereich mit lediglich zwei übereinander angeordneten Lagen des Siegelfolienverbunds kann beispielsweise gebildet sein durch eine Vorderseite einer Lebensmittelverpackung und eine mit dieser durch Siegeln verbundene Rückseite derselben Verpackung, wobei jede dieser Seiten aus dem Siegelfolienverbund hergestellt ist. Der andere Bereich mit vier übereinander angeordneten Lagen des Siegelfolienverbunds kann gebildet sein durch Einfalten eines Bodens zwischen Vorder- und Rückseite, etwa in einer sogenannten "W-Faltung", wie sie im Stand der Technik bekannt ist. Dann bildet beispielsweise eine Lage des Siegelfolienverbunds die Vorderseite der Verpackung, eine weitere Lage des Siegelfolienverbunds einen der Vorderseite gegenüberliegenden Bodenflächenabschnitt der Verpackung, eine weitere Lage des Siegelfolienverbunds einen der Rückseite gegenüberliegenden Bodenflächenabschnitt der Verpackung und eine vierte Lage des Siegelfolienverbunds schließlich die Rückseite der Verpackung.

Da zu beiden Seiten des beschriebenen Übergangs von zwei auf mehr als zwei, insbesondere vier Siegelfolienverbundhöhen je eine Vorder- und eine Rückseite vorgesehen sein kann, wird ein Siegelbereich, etwa eine Randsiegelnaht, kontinuierlich gefertigt, wobei es am beschriebenen Übergang zu einem Dickensprung von zwei Siegelfolienverbundhöhen auf mehr als zwei, insbesondere vier Siegelfolienverbundhöhen oder umgekehrt kommt. An dieser Stelle gestaltet sich die Herstellung einer zuverlässig dichten und ausreichend festen Siegelnaht wegen des Dickensprungs schwierig. So steigt mit der Lagenhöhe des Siegelbereichs am Ort des Dickensprungs ebenso sprunghaft der effektive Siegeldruck im Siegelspalt, so dass es zu einem regelrechten Ausquetschen von Siegelmaterial aus dem Siegelspalt heraus kommt.

Zum einen weist bei biaxial orientierten Siegelverbünden die Siegelschicht üblicherweise eine Dicke im einstelligen Mikrometerbereich auf, so dass nur wenig Siegelmaterial an der Übergangsstelle mit Dickensprung zur Verfügung steht, um einen etwaig entstehenden Zwickel zwischen der Vorder- und der Rückseite des Verpackungsbeutels mit Siegelmaterial zu füllen.

Zum anderen ist die Basisschicht des Siegelfolienverbundes aus dem Stand der Technik unter den üblichen Siegelbedingungen (Siegeltemperatur, Siegeldruck und Siegeldauer), unter denen die siegelfähige Polyolefinschicht in der industriellen Massenproduktion siegelbar ist, nicht siegelbar, so dass nur das Material der siegelfähigen Polyolefinschicht zur Herstellung einer Verbindung zwischen der Vorder- und der Rückseite der Verpackung und der Vorder- und der Rückseite und je einem Bodenabschnitt zur Verfügung steht. Die Verwendung dickerer Siegelschichten, so dass mehr Material zur Auffüllung des an der beschriebenen Übergangsstelle entstehenden Zwickels zur Verfügung steht, ist aus wirtschaftlichen Gründen nicht wünschenswert. Durch Erhöhung des Siegeldrucks oder/und Erhöhung der Siegeltemperatur und damit Verringerung der Viskosität des Siegelmaterials würden die Siegelabschnitte der Verpackung mechanisch und thermisch unerwünscht stark beeinflusst, was deren äußeres Erscheinungsbild in unerwünschter Weise nachteilig verändern kann.

Aufgabe der vorliegenden Erfindung ist es daher, eine technische Lehre anzugeben, mit welcher es gelingen kann, auch schwierige Übergangsstellen mit Dickensprüngen in der oben beschriebenen Art und Weise sicher und ohne Überlastung des Materials in Massenproduktion, d. h. mit einer Siegeldauer von nicht mehr als einigen Sekunden (weniger als 15 Sek., vorzugsweise weniger als 10 Sek.) gasdicht zu siegeln, ohne dass die Dicke der Siegelschicht wesentlich erhöht werden muss.

Diese Aufgabe wird erfindungsgemäß gelöst durch einen Verpackungsbeutel mit allen Merkmalen des Anspruchs 1. Dieser umfasst einen Siegelfolienverbund der eingangs genannten Art, bei welchem der Schmelzflussindex, bestimmt gemäß DIN ISO 1133 bei einer Prüftemperatur von 230°C und mit einer Prüflast von 2,16 kg, des Materials der siegelfähigen Polyolefinschicht mindestens gleich groß ist wie der Schmelzflussindex des Materials der Basisschicht und höchstens nicht mehr als das Dreifache des Schmelzflussindex des Materials der Basisschicht beträgt.

Durch die erfindungsgemäße Wahl der Schmelzflussindexwerte - wobei dies sowohl für Schmelze-Volumenfließraten als auch für Schmelze-Massefließraten gilt -wird beim industriell üblichen zeitlich kurzen Siegelvorgang auch die Basisschicht erweicht und verformt, so dass bei üblichen Siegeldrücken und Siegeltemperaturen an kritischen Siegelstellen, wie der beschriebenen Übergangsstelle mit Dickensprung, erfindungsgemäß auch die Basisschicht zum Füllen eines Zwickels oder zur Verbindung miteinander zu siegelnder Folienverbundlagen beitragen kann.

Der Schmelzflussindex der siegelfähigen Polyolefinschicht liegt aufgrund ihrer Siegelfähigkeit stets in einem vorbestimmten MFR- oder MVR-Bereich ("MVR" = Melt Volume Flow Rate = Schmelze-Volumenfließrate; "MFR" = Schmelze-Massefließrate). Im Zweifel soll die Schmelze-Massefließrate als Schmelzflussindex im Sinne der vorliegenden Anmeldung herangezogen werden.

Durch die Begrenzung des Schmelzflussindex des Materials der siegelfähigen Polyolefinschicht auf nicht mehr als das Dreifache des Schmelzflussindex des Basisschichtmaterials aus Polyolefin wird eine Mischbarkeit der beiden Schichtmaterialien erhalten, was das Siegeln von Siegelnaht-Übergangsstellen mit Dickensprüngen erheblich erleichtert.

Dadurch, dass die Basisschicht in der Regel eine wesentlich größere Dicke aufweist als die siegelfähige Polyolefinschicht, steht aufgrund des erfindungsgemäß angegebenen Schmelzflussindexverhältnisses zwischen Siegelschicht und Basisschicht beim Siegeln eine erheblich größere Menge an erweichbaren und untereinander mischbaren Materialien zur Verfügung als beim Stand der Technik. Durch die so verbesserte Siegelfähigkeit wird auch eine verglichen mit dem Stand der Technik erhöhte Siegelnahtfestigkeit erhalten.

Zur Erhöhung der Mischbarkeit der Materialien aus siegelfähiger Schicht und Basisschicht ist es weiter bevorzugt, wenn der Schmelzflussindex des Materials der Siegelschicht einen Wert aufweist, der zwischen dem 1,5- bis 2,5-fachen des Schmelzflussindex des Basisschichtmaterials liegt. Höchst bevorzugt liegt der Wert des Schmelzflussindex des Materials der Siegelschicht zwischen dem 2,0- und dem 2,3-fachen des Wertes des Schmelzflussindex des Basisschichtmaterials. Hier wird beim Siegeln mit industriell üblichen Siegelparametern, insbesondere mit Siegeldauern im einstelligen Sekundenbereich, vorzugsweise kleiner als 5 Sekunden, ein optimaler Kompromiss zwischen Beitrag der Basisschicht zu Stabilität und Steifigkeit des Laminats einerseits und Beteiligung der Basisschicht an der Siegelnahtbildung andererseits erreicht.

Der Siegelfolienverbund kann bevorzugt nur die siegelfähige Polyolefinschicht und die Basisschicht aufweisen oder kann weiter bevorzugt noch genau eine weitere außen liegende Kunststoffschicht aufweisen, so dass die Basisschicht in diesem Falle zwischen der siegelfähigen Polyolefinschicht und der weiteren Kunststoffschicht gelegen ist.

Bei Herstellung eines nur zweischichtigen Siegelfolienverbundes kann die Basisschicht später metallisiert werden oder eine Metalllage auf sie auflaminiert werden. Dadurch kann die Barrierewirkung des Siegelfolienverbundes gegen Durchgang von Sauerstoff und Wasserdampf erhöht werden. Die Metallisierung oder Metalllage gilt nicht als Kunststoff-Folienschicht im Sinne der vorliegenden Erfindung.

Verglichen mit dem Stand der Technik erfährt also die Basisschicht die wesentliche Veränderung durch Einstellung ihres Schmelzflussindex auf den Wert des Materials der siegelfähigen Polyolefinschicht oder auf einen in den angegebenen Grenzen kleineren Wert. Der Schmelzflussindex der Basisschicht ist durch Wahl der für die Bildung der Basisschicht verwendeten Materialkomponenten einstellbar. Eine Einstellung des Schmelzflussindex der Basisschicht kann dadurch realisiert sein, dass das Material der Basisschicht eine Mischung eines Polypropylen-Homopolymers mit einem Copolymer, insbesondere mit einem Random-Polymer ist. Als Copolymer kann grundsätzlich ein beliebiges Copolymer verwendet werden, beispielsweise auch ein Polypropylen-Terpolymer. Bevorzugt ist jedoch die Verwendung eines Random-Polymers als das Copolymer im Material der Basisschicht, da hierdurch die mechanische Festigkeit der Basisschicht am stärksten ausgebildet werden kann. Außerdem gestattet die Beimischung von Random-Polymer eine Absenkung der Prozesstemperaturen beim Extrudieren und gegebenenfalls bei einem nachfolgenden Recken des Siegelfolienverbundes.

Das Polypropylen-Homopolymer ist dabei aufgrund des verglichen mit Copolymeren niedrigeren Preises wirtschaftlich erwünscht. Durch die Beimischung des Copolymers, insbesondere des Random-Polymers, kann jedoch häufig eine niedrigere Schmelztemperatur bzw. ein niedrigerer Erweichungspunkt als bei einem reinen Polypropylen-Homopolymer und somit eine Erhöhung des Schmelzflussindex bewirkt werden. Zu den Einflussfaktoren auf den Schmelzflussindex einer Polymermischung werden weiter unten Details genannt.

Zur Gewährleistung einer guten Mischbarkeit des Materials der Basisschicht ist bevorzugt, dass das Copolymer, insbesondere das Random-Polymer, Propylen als Monomer umfasst. Damit kann das Propylen als Monomer umfassende Copolymer gut mit dem Polypropylen-Homopolymer vermischt werden.

Es soll jedoch auch nicht ausgeschlossen sein, dass das Copolymer, insbesondere das Random-Polymer zusätzlich oder alternativ Ethylen als Monomer umfasst.

Um die Kosten des hier diskutierten Siegelfolienverbunds möglichst gering zu halten und somit die wirtschaftliche Attraktivität des Siegelfolienverbunds zu erhöhen, ist vorzugsweise der Gewichtsanteil des Polypropylen-Homopolymers in der Basisschicht der größte Gewichtsanteil eines Polymerbestandteils des Basisschichtmaterials. Bevorzugt sollte der Gewichtsanteil des Polypropylen-Homopolymers am Gesamtgewicht des Basisschichtmaterials nicht weniger als 50 Gew.-% betragen. Je nach gewünschtem Schmelzindex des Basisschichtmaterials kann dieses insbesondere dann, wenn es neben dem Polypropylen-Homopolymer nur ein Random-Polymer oder auch weniger bevorzugt nur ein Terpolymer aufweist, Gewichtsverhältnisse von Homopolymer: Radom-Polymer = 60 : 40 oder sogar 70 : 30, jedoch nicht weniger als 50 : 50 aufweisen. Bei weniger als 50 Gew.-% Anteil an Polypropylen-Homopolymer an einem Basisschichtmaterial, das ansonsten nur noch ein Random-Polymer als einzige weitere Komponente enthält, können am erweichten Basisschichtmaterial beim Siegeln Fließstörungen auftreten. Das Verhältnis Homopolymer : Random-Polymer von 60 : 40 ist nach bisherigen Versuchsergebnissen bevorzugt.

Auch die siegelfähige Polyolefinschicht kann ein Polypropylen-Homopolymer oder/und ein Copolymer unter Beteiligung von Propylen als Monomer umfassen, wobei sich, wie eingangs dargelegt, die Polymerzusammensetzungen von siegelfähiger Polyolefinschicht und von Basisschicht unterscheiden. Dies kann beispielsweise dadurch realisiert sein, dass das Material der siegelfähigen Polyolefinschicht zu mehr als 50 Gew.-% aus einem Copolymer unter Beteiligung von Propylen als Monomer besteht. Ein höherer Gewichtsanteil eines Copolymers als im Basisschichtmaterial kann zu einem gewünschten höheren Schmelzflussindex des Materials der siegelfähigen Polyolefinschicht führen, verglichen mit jenem der Basisschicht. Dies hängt jedoch von den weiteren Bestandteilen der siegelfähigen Polyolefinschicht ab. Bestehen beide Schichten: Basisschicht und siegelfähige Polyolefinschicht, jedoch nur aus Polypropylen-Homopolymer und aus einem Copolymer unter Beteiligung von Propylen als Monomer, dann weist häufig dasjenige Material mit dem höheren Copolymer-Gewichtsanteil auch den höheren Schmelzflussindex auf. Der Schmelzflussindex einer Mischung von Kunststoffkomponenten hängt jedoch primär von der Molmasse und der Molekülstruktur (etwa der Länge von Seitenketten) der Ausgangskomponenten ab. Grundsätzlich kann der Schmelzflussindex einer Polymermischung durch Änderung der zu mischenden Komponenten oder/und ihres Mischungsverhältnisses geändert werden.

Es kann überdies daran gedacht sein, dass das Material der siegelfähigen Polyolefinschicht nur aus einem Copolymer unter Beteiligung von Propylen als Monomer besteht. Dann kann der Schmelzflussindex der siegelfähigen Polyolefinschicht besonders hoch eingestellt sein, wobei ein solches Material, verglichen mit einer Mischung aus Copolymer und Homopolymer, auch einen höheren gewichtsbezogenen Preis haben wird.

Konkret kann der Schmelzflussindex des Materials der siegelfähigen Polyolefinschicht in einem Bereich von 4 bis 8 g/10min liegen. Zur Sicherstellung guter Siegeleigenschaften liegt der Schmelzflussindex der siegelfähigen Polyolefinschicht bevorzugt im oberen Teil des genannten Bereichs, ist also bevorzugt größer als 5 g/10min und besonders bevorzugt größer als 6,5 g/10min. Um ein zu rasches Fließen des siegelfähigen Polyolefinmaterials beim Siegeln zu vermeiden, ist der Schmelzflussindex bevorzugt nicht größer als 8 g/10min, bevorzugt nicht größer als 7,5 g/10min. Ebenso kann der Schmelzflussindex des Basisschichtmaterials in einem Bereich von 2 bis 5 g/10min liegen. Bevorzugt ist dessen Schmelzflussindex nicht größer als 4 g/10min, besonders bevorzugt nicht größer als 3,3 g/10min. Es gelten die oben zur Lösung der der vorliegenden Erfindung zugrunde liegenden objektiven technischen Aufgabe definierten Randbedingungen.

Mit dem Siegelfolienverbund der vorliegenden Erfindung kann die Schichtdicke der siegelfähigen Polyolefinschicht ohne Verminderung ihrer Siegelfähigkeit gerade beim Siegeln von den eingangs beschriebenen kritischen Siegelstellen in erwünschter Weise kleingehalten werden. Beispielsweise kann die Schichtdicke der siegelfähigen Polyolefinschicht in einem Bereich von 0,5 bis 3 µm, vorzugsweise in einem Bereich von 1 bis 2,5 µm liegen. Besonders bevorzugt liegt die Schichtdicke in einem Bereich von 1,5 bis 2,5 µm. Die Basisschicht soll dagegen, wenngleich sie auch aufgrund ihrer Materialzusammensetzung am Siegelvorgang teilnehmen kann, die notwendige Festigkeit und Dichtigkeit des Siegelfolienverbunds bereitstellen. Deshalb ist bevorzugt vorgesehen, dass die Schichtdicke der Basisschicht in einem Bereich von 15 bis 25 µm, vorzugsweise in einem Bereich von 16 bis 19 µm, höchst bevorzugt in einem Bereich von 16 bis 18 µm liegt.

Ebenso kann die Schichtdicke der optional vorhandenen weiteren außen liegenden Kunststoffschicht in einem Bereich von 0,5 bis 3 µm, vorzugsweise in einem Bereich von 1 bis 2,5 µm liegen. Besonders bevorzugt liegt die Schichtdicke in einem Bereich von 1,5 bis 2,5 µm.

Der Siegelfolienverbund weist bevorzugt eine Dichte im Bereich von 0,85 bis 0,95, besonders bevorzugt von etwa 0,9 g/cm³ auf.

Die weitere außen liegende Kunststoffschicht kann die gleiche Schichtdicke haben wie die siegelfähige Polyolefinschicht. Alternativ oder zusätzlich kann sie aus dem gleichen Material gebildet sein. Beispielsweise kann ein dreischichtig ausgeführter erfindungsgemäßer Siegelfolienverbund mit zwei Extrudern und drei Schmelzkanälen, die in einer Coextrusionsdüse zusammenlaufen, durch Coextrusion hergestellt werden. Dabei führt ein Schmelzkanal das die Basisschicht bildende Material und die beiden anderen Schmelzkanäle führen jeweils das außen liegende, die siegelfähige Polyolefinschicht und die weitere außen liegende Kunststoffschicht bildende Material. Ein Extruder bedient dabei den erstgenannten Schmelzkanal, der andere Extruder die beiden letztgenannten Schmelzkanäle.

Dann, wenn die weitere außen liegende Kunststoffschicht ebenfalls eine siegelfähige Polyolefinschicht ist, kann ein aus diesem Siegelfolienverbund hergestellter Stehbeutel mit eingefaltetem Boden auch im Bereich des Bodens derart gesiegelt sein, dass jede aus den übereinander liegenden vier Lagen von Siegelfolienverbund mit jeder ihrer Nachbarlagen durch Siegeln verbunden ist.

Die Lagerbarkeit der Siegelverbundfolie kann dadurch verbessert werden, dass eine nach außen freiliegende Schicht, insbesondere die siegelfähige Polypropylenschicht, ein Antiblock- oder/und ein Anti-Slip-Additiv aufweist.

Zur Erhöhung der Steifigkeit des Siegelfolienverbunds sowie zur Verbesserung seiner Transparenz, zur Erhöhung seiner Fettbeständigkeit, zur Verbesserung seiner Metallisierbarkeit und zur Erhöhung seiner Barriereeigenschaften ist der Siegelfolienverbund ein biaxial orientierter Siegelfolienverbund. Ein vorteilhaftes Reckverhältnis liegt im Bereich von 1 : 6 bis 1 : 10, besonders bevorzugt bei 1 : 8. Die biaxiale Orientierung gestattet außerdem eine erhöhte Produktivität, da der biaxial orientierte Siegelfolienverbund, verglichen mit einem nicht biaxial orientierten, mit größerer Breite hergestellt werden kann.

Der vorliegend diskutierte Siegelfolienverbund führt zu einem neuartigen Verfahren zur Bereitstellung desselben. Während nämlich im Stand der Technik üblicherweise ein Siegelfolienverbund ausgehend von seiner Substratlage, hier: der Basisschicht, aufgebaut wird, geht man bei der Bereitstellung des hier diskutierten Siegelfolienverbunds aus von einer Funktionsschicht in Form der siegelfähigen Polyolefinschicht. Zunächst wird also die siegelfähige Polyolefinschicht definiert, etwa hinsichtlich ihres Materials, ihrer Dicke, ihrer Siegeleigenschaften und dergleichen. Ist die siegelfähige Polyolefinschicht so hinreichend definiert, dass ihr Schmelzflussindex ermittelbar ist, wird in einem nächsten Verfahrensschritt der Schmelzflussindex der siegelfähigen Polyolefinschicht gemäß DIN ISO 1133 ermittelt.

Ausgehend von dem so ermittelten Schmelzflussindex der siegelfähigen Polyolefinschicht wird in einem weiter nachfolgenden Schritt die Basisschicht nach Maßgabe des Ergebnisses der Schmelzflussindexermittlung derart definiert, dass der Schmelzflussindex des Materials der siegelfähigen Polyolefinschicht mindestens gleich groß und nicht mehr als dreimal so groß ist wie der Schmelzflussindex des Materials der Basisschicht, vorzugsweise mindestens das 1,5-fache und höchstens das 2,5-fache, höchst bevorzugt mindestens das 2,0-fache und höchstens das 2,3-fache des Schmelzflussindex des Basisschichtmaterials beträgt.

Da der Schmelzflussindex eines Kunststoffmaterials in der Regel maßgeblich von der Materialzusammensetzung des Materials abhängt, umfasst der Schritt des Definierens der Basisschicht vorzugsweise wenigstens einen der beiden folgenden Unterschritte: Bestimmen von Materialkomponenten zur Bildung des Materials der Basisschicht oder/und Bestimmen von Materialkomponentenanteilen für Materialkomponenten zur Bildung der Basisschicht. Vorzugsweise werden sowohl die Materialkomponenten als auch deren Anteile am Material der Gesamtzusammensetzung des Basisschichtmaterials ermittelt, um einen gewünschten Schmelzflussindex oder Schmelzflussindexbereich des Basisschichtmaterials zu erhalten. Die Materialkomponentenanteile sollten dabei zur Erleichterung der Mischung des Basisschichtmaterials in Gewichtsprozent oder allgemein als gewichtsbezogene Größe angegeben werden, wenngleich auch eine volumenbezogene Angabe nicht ausgeschlossen sein soll.

Vorzugsweise ist der Dickensprungbereich durch eine Einfaltung eines Bodenabschnitts des Verpackungsbeutels begründet, wobei zu einer Seite des Dickensprungbereichs nur genau zwei übereinander angeordnete Lagen aus dem Siegelfolienverbund als Vorderseite und Rückseite miteinander durch Siegeln verbunden sind und zur anderen Seite desselben vier übereinander angeordnete Lagen aus dem Siegelfolienverbund als Vorder- und Rückseite sowie als eine der Vorderseite zugewandte Bodenfläche und eine der Rückseite zugewandte Bodenfläche vorgesehen sind. Von den vier übereinander angeordneten Lagen aus dem Siegelfolienverbund können wenigstens die zwei außen liegenden Lagenpaare durch Siegeln miteinander verbunden sein. Bei Verwendung eines dreilagigen Siegelfolienverbunds mit zwei außen liegenden siegelfähigen Polyolefinlagen kann auch jede Lage mit ihrer unmittelbar benachbarten Lage durch Siegeln verbunden sein.

Die vorliegende Erfindung wird nachfolgend anhand der beiliegenden Zeichnungen näher erläutert. Es stellt dar:
- Figur 1: eine Querschnittsansicht eines Siegelfolienverbunds für einen erfindungsgemäßen Verpackungsbeutel und
- Figur 2: eine Seitenansicht eines Siegelabschnitts mit Dickensprungbereich.

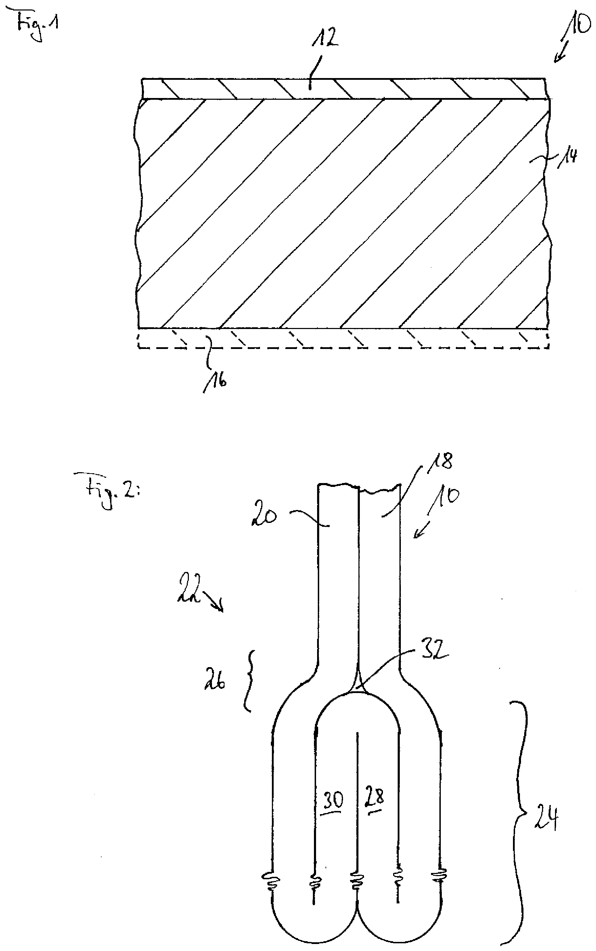

In Figur 1 ist eine erfindungsgemäße Ausführungsform eines biaxial orientierten Siegelfolienverbunds im Querschnitt dargestellt und allgemein mit 10 bezeichnet.

Der Siegelfolienverbund weist eine außen liegende siegelfähige Polyolefinschicht 12 und ihr unmittelbar benachbart eine Basisschicht 14 aus Polyolefin auf.

Der Siegelfolienverbund 10 kann eine weitere außen liegende Kunststoffschicht 16 aufweisen, welche vorzugsweise mit der siegelfähigen Polyolefinschicht 12 hinsichtlich Schichtdicke und hinsichtlich Polymerzusammensetzung identisch ist und deshalb im vorliegenden Beispiel nicht eigens beschrieben wird. Stattdessen wird zur Erläuterung der weiteren außen liegenden Kunststoffschicht 16 auf die Beschreibung der siegelfähigen Polyolefinschicht 12 verwiesen.

Vorzugsweise sind die Schichten 12 und 14, gegebenenfalls auch die weitere Kunststoffschicht 16 des Siegelfolienverbunds 10, koextrudiert, so dass zwischen den einzelnen Schichten 12, 14 und gegebenenfalls 16 keine Adhäsionslage vorgesehen ist. Es soll jedoch nicht ausgeschlossen sein, dass zwischen einzelnen oder allen Schichten des Siegelfolienverbunds eine Adhäsionsschicht vorgesehen ist.

Weiter kann auf den Siegelfolienverbund eine in Figur 1 nicht dargestellte Druckschicht aufgetragen sein, um Produktinformationen oder Marken auf dem Siegelfolienverbund zu hinterlegen. In an sich bekannter Weise kann das Druckbild durch einen Überdrucklack und dergleichen vor äußeren Einflüssen geschützt sein. Eine Druckschicht ist keine Kunststoff-Folienschicht im Sinne der vorliegenden Anmeldung.

Zur Erhöhung der möglicherweise vorhandenen Transparenz, der Beständigkeit gegenüber Fetten, zur Verbesserung der Barriereeigenschaften und zur Bereitstellung einer höheren Steifigkeit bei vergleichsweise geringer Schicht- bzw. Verbunddicke ist der Siegelfolienverbund 10 biaxial gereckt.

Die Schichtdicke der Siegelschicht 12 beträgt vorzugsweise 1 bis 2,5 µm. Die Schichtdicke der Basisschicht 14 liegt bevorzugt bei 16 bis 18 µm, um dem Siegelfolienverbund die notwendige Festigkeit zu verleihen. Jedenfalls ist die Summe aller Schichtdicken des Siegelfolienverbunds 10 nicht größer als 30 µm. Erfindungsgemäß weist das Material der siegelfähigen Polyolefinschicht 12 einen Schmelzflussindex auf, welcher wenigstens gleich groß ist wie der Schmelzflussindex des Basisschichtmaterials und welcher nicht größer als das Dreifache des Schmelzflussindex des Basisschichtmaterials ist. Bevorzugt ist der Schmelzflussindex des Basisschichtmaterials 3 bis 3,3 g/10min und ist der Schmelzflussindex der siegelfähigen Polyolefinschicht etwa 7 g/10min. Diese bevorzugten Werte gelten unabhängig vom hier dargestellten Ausführungsbeispiel allgemein.

Diese Wahl der Schmelzflussindexbereiche für die Siegelschicht 12 und für die Basisschicht 14 stellt sicher, dass die Basisschicht beim Siegeln zumindest an ihrem an die siegelfähige Schicht angrenzenden Grenzbereich erweicht bzw. aufgeschmolzen wird und so am Siegelprozess teilnehmen kann. Dann, wenn beide Schichten aufgeschmolzen sind, kann eine Mischung der beiden polyolefinhaltigen Schichten erfolgen, so dass die Basisschicht 14 auch zu einem Siegelergebnis bzw. zu einer Siegelnaht beitragen kann.

Beispielsweise kann die siegelfähige Polyolefinschicht 12 gebildet sein aus einer Polymerzusammensetzung mit 30 Gew.-% Polypropylen-Homopolymer und 70 Gew.-% aus einem Copolymer, umfassend Propylen und Ethylen.

Das Copolymer ist bevorzugt ein Random-Polymer. Die siegelfähige Polyolefinschicht 12 kann auch aus 100% Random-Copolymer bestehen.

Die Basisschicht 14 kann dagegen bevorzugt gebildet sein aus einem Polymermaterial mit 60 Gew.-% Polypropylen-Homopolymer und 40 Gew.-% Copolymer, wobei das Copolymer Propylen und Ethylen umfassen kann. Wiederum ist ein Random-Polymer als das Copolymer bevorzugt.

In Figur 2 ist ein Siegelabschnitt aus dem Siegelfolienverbund 10 von Figur 1 dargestellt. Der Siegelfolienverbund 10 bildet dabei eine Vorderseite 18 und eine Rückseite 20 einer aus dem Siegelfolienverbund 10 gebildeten Stehbeutelverpackung 22. Der Bodenbereich 24 der Stehbeutelverpackung 22 ist durch eine sogenannte W-Faltung gebildet, so dass es zur Bildung eines Dickensprungbereichs 26 kommt, in dem ein lediglich durch zwei übereinander liegende Lagen gebildeter Verpackungsbereich übergeht in einen durch vier übereinander liegend angeordnete Lagen des Siegelfolienverbunds 10 gebildeten Bereich. In dem Dickensprungbereich 26 ist zwischen den die Vorderseite 18 und die Rückseite 20 der Stehbeutelverpackung 22 bildenden Siegelfolienverbundabschnitten und den die Bodenflächen 28 und 30 bildenden Siegelfolienverbundabschnitten ein Zwickel 32 gebildet, welcher zur sicheren Aufbewahrung von Lebensmitteln in der Stehbeutelverpackung abgedichtet werden muss.

Die Bodenfläche 28 liegt dabei unmittelbar der Vorderseite 18 gegenüber, die Bodenfläche 30 liegt unmittelbar der Rückseite 26 gegenüber. Der Siegelfolienverbund 10 ist in Figur 2 derart angeordnet, dass die Siegelschichten 12 der Vorderseite 18 und der Rückseite 20 durch Siegelung miteinander im Bereich oberhalb des Dickensprungbereichs 26 verbunden sind und dass die Siegelschicht 12 der Rückseite 20 und der ihr unmittelbar gegenüber liegenden Bodenfläche 30 zur Siegelung miteinander verbunden sind und dass die Siegelschichten 12 der Vorderseite 18 und der ihr unmittelbar gegenüber liegenden Bodenfläche 28 zur Siegelung miteinander verbunden sind.

Ist auch die weitere Kunststoffschicht 16 als siegelfähige Polyolefinschicht vorgesehen, können auch die beiden Bodenflächen 28 und 30 durch Siegeln miteinander verbunden sein.

Aufgrund der lediglich geringen Schichtdicke der Polyolefinschicht 12 ist es gewöhnlich mit Schwierigkeiten verbunden, den Dickensprungbereich 26 der Stehbeutelverpackung 22 wiederholbar so zu siegeln, dass der Zwickel 32 ausreichend mit Kunststoffmaterial gefüllt und damit ausreichend dicht, insbesondere gasdicht, ist.

Bei dem hier diskutierten Siegelfolienverbund 10 kann bei den für die Siegelung der siegelfähigen außen liegenden Polyolefinschicht(en) in industrieller Massenproduktion üblichen Siegelbedingungen mit kurzer Siegeldauer im Sekundenbereich auch die Basisschicht 14 erweicht werden. Die Basisschicht 14 kann daher aktiv zu einem Siegelvorgang beitragen. Insbesondere kann eine Vermischung von Kunststoffmaterial aus der siegelfähigen Polyolefinschicht 12 und der Basisschicht 14 erfolgen, so dass der Zwickel 32 wesentlich einfacher dicht und mit ausreichender Festigkeit gesiegelt werden kann, als dies bei Siegelfolienverbünden des Standes der Technik mit Basisschichten der Fall war, die während eines herkömmlichen industriellen Siegelvorgangs bei den üblicherweise zu wählenden Parametern, insbesondere der kurzen Siegeldauer, nicht zur Siegelung beitrugen.

Die Wellenlinien im unteren Abschnitt des Bodenbereichs 24 in Figur 2 sollen lediglich andeuten, dass der Bodenbereich 24 länger als in Figur 2 dargestellt ausgebildet sein kann.

## Patentansprüche

1. Verpackungsbeutel zur Verpackung von Lebensmitteln, umfassend in einem Siegelabschnitt einen biaxial orientierten Siegelfolienverbund (10) mit mehr als einer Kunststoff-Folienschicht und mit einer Gesamtdicke von nicht mehr als 30 µm, wobei der Siegelabschnitt einen Dickensprungbereich (26) aufweist, zu dessen einer Seite zwei übereinander angeordnete und miteinander durch Siegeln verbundene Lagen (18, 20) aus dem Siegelfolienverbund (10) und zu dessen anderer Seite mehr als zwei übereinander angeordnete Lagen aus dem Siegelfolienverbund (10) vorgesehen sind, von welchen letzteren wenigstens einige benachbarte Lagen durch Siegeln miteinander verbunden sind, wobei der Siegelfolienverbund (10) umfasst:
- eine nach außen freiliegende siegelfähige Polyolefinschicht (12),
- eine der siegelfähigen Polyolefinschicht (12) unmittelbar benachbarte Basisschicht (14) aus Polyolefin, welche sich wenigstens hinsichtlich der Polymerzusammensetzung von der siegelfähigen Polyolefinschicht (12) unterscheidet, und von welchen Lagen die Basisschicht (14) die größte Dicke aufweist,
wobei der Schmelzflussindex, bestimmt gemäß DIN ISO 1133 bei einer Prüftemperatur von 230°C und mit einer Prüflast von 2,16 kg, des Materials der siegelfähigen Polyolefinschicht (12) mindestens gleich groß ist wie der Schmelzflussindex des Materials der Basisschicht (14) und höchstens nicht mehr als das Dreifache des Schmelzflussindex des Materials der Basisschicht (14) beträgt, wobei im Dickensprungbereich (26) auch die Basisschicht (14) nach Erweichung und Verformung zum Füllen eines Zwickels (32) oder zur Verbindung miteinander zu siegelnder Lagen (18, 20, 28, 30) des Siegelfolienverbundes (10) beiträgt.

2. Verpackungsbeutel nach Anspruch 1,
**dadurch gekennzeichnet, dass** das Material der Basisschicht (14) eine Mischung eines Polypropylen-Homopolymers mit einem Copolymer ist.

3. Verpackungsbeutel nach Anspruch 2,
**dadurch gekennzeichnet, dass** das Copolymer ein Random-Polymer ist.

4. Verpackungsbeutel nach Anspruch 2 oder 3,
**dadurch gekennzeichnet, dass** das Copolymer Propylen oder/und Ethylen umfasst.

5. Verpackungsbeutel nach einem der Ansprüche 2 bis 4,
**dadurch gekennzeichnet, dass** der Gewichtsanteil des Polypropylen-Homopolymers der größte Gewichtsanteil eines Polymerbestandteils des Basisschichtmaterials ist.

6. Verpackungsbeutel nach einem der vorhergehenden Ansprüche,
**dadurch gekennzeichnet, dass** das Material der siegelfähigen Polyolefinschicht (12) ein Polypropylen-Homopolymer oder/und ein Copolymer unter Beteiligung von Propylen umfasst.

7. Verpackungsbeutel nach Anspruch 6,
**dadurch gekennzeichnet, dass** das Material der siegelfähigen Polyolefinschicht (12) zu mehr als 50 Gew.-% aus einem Copolymer unter Beteiligung von Propylen besteht.

8. Verpackungsbeutel nach Anspruch 7,
**dadurch gekennzeichnet, dass** das Material der siegelfähigen Polyolefinschicht (12) nur aus einem Copolymer unter Beteiligung von Propylen besteht.

9. Verpackungsbeutel nach einem der vorhergehenden Ansprüche,
**dadurch gekennzeichnet, dass** der Schmelzflussindex des Materials der siegelfähigen Polyolefinschicht (12) in einem Bereich von 4 bis 8 g/10min, bevorzugt von 5 bis 7,5 g/10min, besonders bevorzugt von 6,5 bis 7,5 g/10min liegt.

10. Verpackungsbeutel nach einem der vorhergehenden Ansprüche,
**dadurch gekennzeichnet, dass** der Schmelzflussindex des Basisschichtmaterials in einem Bereich von 2 bis 5 g/10 min. liegt.

11. Verpackungsbeutel nach einem der vorhergehenden Ansprüche,
**dadurch gekennzeichnet, dass** die Schichtdicke der siegelfähigen Polyolefinschicht (12) in einem Bereich von 0,5 bis 3 µm, vorzugsweise in einem Bereich von 1 bis 2,5 µm, besonders bevorzugt 1,5 bis 2,5 µm liegt.

12. Verpackungsbeutel nach einem der vorhergehenden Ansprüche,
**dadurch gekennzeichnet, dass** die Schichtdicke der Basisschicht (14) in einem Bereich von 15 bis 25 µm, vorzugsweise in einem Bereich von 16 bis 19 µm, höchst bevorzugt in einem Bereich von 16 bis 18 µm liegt.

13. Verpackungsbeutel nach einem der vorhergehenden Ansprüche,
**dadurch gekennzeichnet, dass** die Schichtdicke einer weiteren außen liegenden Kunststoffschicht (16), welche dünner als die Basisschicht (14) ist, in einem Bereich von 0,5 bis 3 µm, vorzugsweise in
einem Bereich von 1 bis 2,5 µm, besonders bevorzugt 1,5 bis 2,5 µm liegt.

14. Verpackungsbeutel nach einem der vorhergehenden Ansprüche,
**dadurch gekennzeichnet, dass** der biaxial orientierte Siegelfolienverbund (10) eine weitere außen liegende Kunststoffschicht (16) aufweist, welche dünner als die Basisschicht (14) und mit
der siegelfähigen Polyolefinschicht (12) hinsichtlich der Schichtdicke oder/und der Materialzusammensetzung identisch ist.

15. Verpackungsbeutel nach einem der vorhergehenden Ansprüche,
**dadurch gekennzeichnet, dass** im Siegelabschnitt Kunststoffmaterial der siegelfähigen Polyolefinschicht (12) und Kunststoffmaterial der Basisschicht (14) vermischt sind.

## Claims

1. Packaging bag for the packaging of groceries, comprising in one sealing section a biaxially oriented sealing foil composite (10) having more than one synthetic material foil layer and having a total thickness not exceeding 30 µm, where the sealing section exhibits a thickness jump region (26), at the one side of which there are provided two layers (18, 20) of the sealing foil composite (10) arranged one over the other and bonded with one another by seals and at the other side of which there are provided more than two layers of the sealing foil composite (10) arranged one over the other, of which latter at least several adjacent layers are bonded with one another through seals, where the sealing foil composite (10) comprises:
- A sealable polyolefin layer (12) exposed towards the outside,
- A base layer (14) consisting of polyolefin immediately adjacent to the sealable polyolefin layer (12), which differs from the sealable polyolefin layer (12) at least with regard to the polymer composition and out of which layers the base layer (14) exhibits the greatest thickness,
Where the melt flow index, determined in accordance with DIN ISO 1133 at a test temperature of 230 °C and at a test load of 2.16 kg, of the material of the sealable polyolefin layer (12) is at least as large as the melt flow index of the material of the base layer (14) and at most no more than three times the melt flow index of the base layer (14), where in the thickness jump region (26) the base layer (14) also, after softening and deformation, contributes to the filling of a gusset (32) or to the bonding with one another into sealing layers (18, 20, 28, 30) of the sealing foil composite (10).

2. Packaging bag according to Claim 1,
**Characterized in that** the material of the base layer (14) is a mixture of a polypropylene homopolymer with a copolymer.

3. Packaging bag according to Claim 2,
**Characterized in that** the copolymer is a random polymer.

4. Packaging bag according to Claim 2 or 3,
**Characterized in that** the copolymer comprises propylene and/or ethylene.

5. Packaging bag according to one of Claims 2 to 4,
**Characterized in that** the weight fraction of the polypropylene homopolymer is the greatest weight fraction of a polymer component of the base layer material.

6. Packaging bag according to one of the preceding Claims, **Characterized in that** the material of the sealable polyolefin layer (12) comprises a polypropylene homopolymer and/or a copolymer with the participation of propylene.

7. Packaging bag according to Claim 6,
**Characterized in that** the material of the sealable polyolefin layer (12) consists to more than 50% by weight of a copolymer with the participation of propylene.

8. Packaging bag according to Claim 7,
**Characterized in that** the material of the sealable polyolefin layer (12) consists only of a copolymer with the participation of propylene.

9. Packaging bag according to one of the preceding Claims,
**Characterized in that** the melt flow index of the material of the sealable polyolefin layer (12) lies in a range from 4 to 8 g/10min, preferably from 5 to 7.5 g/10min, especially preferably from 6.5 to 7.5 g/10min.

10. Packaging bag according to one of the preceding Claims, **Characterized in that** the melt flow index of the base layer material lies in a range from 2 to 5 g/10min.

11. Packaging bag according to one of the preceding Claims, **Characterized in that** the layer thickness of the sealable polyolefin layer (12) lies in a range from 0.5 to 3 µm, preferably in a range from 1 to 2.5 µm, especially preferably 1.5 to 2.5 µm.

12. Packaging bag according to one of the preceding Claims, **Characterized in that** the layer thickness of the base layer (14) lies in a range from 15 to 25 µm, preferably in a range from 16 to 19 µm, most preferably in a range from 16 to 18 µm.

13. Packaging bag according to one of the preceding Claims, **Characterized in that** the layer thickness of a further synthetic material layer (16) lying outside which is thinner than the base layer (14) lies in a range from 0.5 to 3 µm, preferably in a range from 1 to 2.5 µm, especially preferably 1.5 to 2.5 µm.

14. Packaging bag according to one of the preceding Claims, **Characterized in that** the biaxially oriented sealing foil composite (10) exhibits a further synthetic material layer (16) lying outside which is thinner than the base layer (14) and is identical with the sealable polyolefin layer (12) with regard to layer thickness and/or material composition.

15. Packaging bag according to one of the preceding Claims, **Characterized in that** in the sealing section there are mixed synthetic material of the sealable polyolefin layer (12) and synthetic material of the base layer (14).

## Revendications

1. Sac d'emballage pour l'emballage de produits alimentaires, comprenant, dans une section de scellement, un composite de film de scellement orienté biaxialement (10) ayant plus d'une couche de film plastique et ayant une épaisseur totale ne dépassant pas 30 µm, la section de scellement ayant une zone de saut d'épaisseur (26), d'un côté de laquelle sont prévues deux couches superposées et reliées entre elles par scellement (18, 20) du composite de film de scellement (10) et de l'autre côté de laquelle sont prévues plus de deux couches superposées du composite de film de scellement (10), dont au moins certaines couches adjacentes sont reliées entre elles par scellement, le composite de film de scellement (10) comprenant :
- une couche de polyoléfine (12) scellable, exposée vers l'extérieur,
- une couche de base (14) en polyoléfine directement adjacente à la couche de polyoléfine scellable (12), qui se distingue de la couche de polyoléfine scellable (12) au moins en ce qui concerne la composition du polymère, et parmi lesquelles couches, la couche de base (14) présente la plus grande épaisseur,
l'indice de fluidité à chaud, déterminé selon la norme DIN ISO 1133 à une température d'essai de 230 °C et avec une charge d'essai de 2,16 kg, du matériau de la couche de polyoléfine scellable (12) étant au moins égal à l'indice de fluidité à chaud du matériau de la couche de base (14) et n'étant pas supérieur à trois fois l'indice de fluidité à chaud du matériau de la couche de base (14), dans lequel dans la zone de saut d'épaisseur (26), la couche de base (14) contribue également, après ramollissement et déformation, au remplissage d'un gousset (32) ou à la liaison de couches (18, 20, 28, 30) à sceller les unes aux autres du complexe de film de scellement (10).

2. Sac d'emballage selon la revendication 1,
**caractérisé en ce que** le matériau de la couche de base (14) est un mélange d'un homopolymère de polypropylène avec un copolymère.

3. Sac d'emballage selon la revendication 2,
**caractérisé en ce que** le copolymère est un polymère aléatoire.

4. Sac d'emballage selon la revendication 2 ou 3,
**caractérisé en ce que** le copolymère comprend du propylène ou/et de l'éthylène.

5. Sac d'emballage selon l'une des revendications 2 à 4,
**caractérisé en ce que** la proportion en poids de l'homopolymère de polypropylène est la plus grande proportion en poids d'un polymère constitutif du matériau de la couche de base.

6. Sac d'emballage selon l'une quelconque des revendications précédentes, **caractérisé en ce que** le matériau de la couche de polyoléfine scellable (12) comprend un homopolymère de polypropylène ou/et un copolymère impliquant du propylène.

7. Sac d'emballage selon la revendication 6,
**caractérisé en ce que** le matériau de la couche de polyoléfine scellable (12) est constitué à plus de 50 % en poids d'un copolymère avec participation de propylène.

8. Sac d'emballage selon la revendication 7,
**caractérisé en ce que** le matériau de la couche de polyoléfine scellable (12) est constitué uniquement d'un copolymère impliquant du propylène.

9. Sac d'emballage selon l'une quelconque des revendications précédentes, **caractérisé en ce que** l'indice de fluidité à chaud du matériau de la couche de polyoléfine scellable (12) est compris dans une plage allant de 4 à 8 g/10 min, de préférence de 5 à 7,5 g/10 min, de manière particulièrement préférée de 6,5 à 7,5 g/10 min.

10. Sac d'emballage selon l'une quelconque des revendications précédentes, **caractérisé en ce que** l'indice de fluidité du matériau de la couche de base est compris dans une plage de 2 à 5 g/10 min.

11. Sac d'emballage selon l'une quelconque des revendications précédentes, **caractérisé en ce que** l'épaisseur de la couche de polyoléfine scellable (12) est comprise dans une plage allant de 0,5 à 3 µm, de préférence dans une plage allant de 1 à 2,5 µm, de manière particulièrement préférée de 1,5 à 2,5 µm.

12. Sac d'emballage selon l'une quelconque des revendications précédentes, **caractérisé en ce que** l'épaisseur de la couche de base (14) est comprise dans une plage allant de 15 à 25 µm, de préférence dans une plage allant de 16 à 19 µm, de manière particulièrement préférée dans une plage allant de 16 à 18 µm.

13. Sac d'emballage selon l'une des revendications précédentes, **caractérisé en ce que** l'épaisseur d'une autre couche de matière plastique située à l'extérieur (16), qui est plus mince que la couche de base (14), est comprise dans une plage de 0,5 à 3 µm, de préférence dans une plage de 1 à 2,5 µm, de manière particulièrement préférée de 1,5 à 2,5 µm

14. Sac d'emballage selon l'une des revendications précédentes, **caractérisé en ce que** le complexe de film de scellement (10) orienté biaxialement présente une autre couche de matière plastique (16) située à l'extérieur, qui est plus mince que la couche de base (14) et qui est identique à la couche de polyoléfine (12) scellable en termes d'épaisseur de couche ou/et de composition de matière.

15. Sac d'emballage selon l'une des revendications précédentes, **caractérisé en ce que,** dans la section de scellement, la matière plastique de la couche de polyoléfine scellable (12) et la matière plastique de la couche de base (14) sont mélangées.
